(19) Europäisches Patentamt / European Patent Office / Office européen des brevets

(11) **EP 3 182 372 B1**

(12) **EUROPEAN PATENT SPECIFICATION**

(45) Date of publication and mention
of the grant of the patent:
**31.07.2019 Bulletin 2019/31**

(51) Int Cl.:
*G06T 7/80* *(2017.01)*      *H04N 13/271* *(2018.01)*
*H04N 13/204* *(2018.01)*      *G06T 5/50* *(2006.01)*

(21) Application number: **16204525.6**

(22) Date of filing: **15.12.2016**

(54) **METHOD AND SYSTEM FOR ESTIMATING THE POSITION OF A PROJECTION OF A CHIEF RAY ON A SENSOR OF A LIGHT-FIELD ACQUISITION DEVICE**

VERFAHREN UND SYSTEM ZUR SCHÄTZUNG DER POSITION EINER PROJEKTION EINES HAUPTSTRAHLS AUF EINEM SENSOR EINER LICHTFELDERFASSUNGSVORRICHTUNG

PROCÉDÉ ET SYSTÈME D'ESTIMATION DE LA POSITION D'UNE PROJECTION D'UN RAYON PRINCIPAL SUR UN CAPTEUR D'UN DISPOSITIF D'ACQUISITION DE CHAMP DE LUMIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2015 EP 15307067**

(43) Date of publication of application:
**21.06.2017 Bulletin 2017/25**

(73) Proprietor: **InterDigital CE Patent Holdings
75017 Paris (FR)**

(72) Inventors:
• **BOISSON, Guillaume**
**35576 Cesson-Sévigné (FR)**
• **OISEL, Lionel**
**35576 Cesson-Sévigné (FR)**
• **GALPIN, Franck**
**35576 Cesson-Sévigné (FR)**

(74) Representative: **Huchet, Anne et al
InterDigital CE Patent Holdings
20, rue Rouget de Lisle
92130 Issy-les-Moulineaux (FR)**

(56) References cited:
**US-A1- 2011 273 609      US-A1- 2014 146 184**

• **Yunsu Bok ET AL: "Geometric Calibration of Micro-Lens-Based Light Field Cameras Using Line Features", Computer Vision - ECCV 2014. ECCV 2014. Lecture Notes in Computer Science, vol 8694, 6 September 2014 (2014-09-06), pages 47-61, XP55361842, DOI: 10.1109/TPAMI.2016.2541145 Retrieved from the Internet: URL:http://rd.springer.com/chapter/10.1007 /978-3-319-10599-4_4 [retrieved on 2017-04-05]**

**Description**

**1. Technical Field**

The present disclosure relates to image or video camera calibration. More precisely, the present disclosure generally relates to a method and a system for estimating the position of a projection of a chief ray on a sensor of an image acquisition device, notably a plenoptic or multi-lens camera.

**2. Background**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Image acquisition devices project a three-dimensional scene onto a two-dimensional sensor. During operation, a conventional capture device captures a two-dimensional (2-D) image of the scene representing an amount of light that reaches a photosensor (or photodetector or photosite) within the device. However, this 2-D image contains no information about the directional distribution of the light rays that reach the photosensor (which may be referred to as the light-field).

Moreover, it is more and more frequent to post-process the image data captured by the sensor, and to run computational photography algorithms on the acquired signals.

However, in order for such image data processing to be performed correctly, it is necessary to have accurate calibration data relating to the image acquisition device used to capture such image or video data.

Notably, when considering a sensor device observing an object space from the image space of an optical system, it is necessary to estimate, for each pixel of the sensor, to which direction(s), or beam(s), it corresponds in the object space (i.e. which portion of the object space is sensed by this pixel). In the present disclosure, the terms "object space" and "image space" respectively stand for the input and output optical spaces usually defined in the optical design discipline. Hence, the "object space" is the observed scene in front of the main lens of an image acquisition device, while the "image space" is the optical space after the optical system of the image acquisition device (main lens, microlenses, ...) where the imaging photosensor captures an image.

Among the required calibration data, what is first needed is to identify the chief ray direction in the object space of the beam corresponding to a sensor pixel. The chief ray corresponds to the optical axis of an optical system.

According to known prior art techniques, optical systems calibration mainly use checkerboards or grids of points in the object space to estimate the position of corners or intersection points on the acquired images in the image space. For a given optical configuration (a given zoom/focus of the optical acquisition device), grid points or corners positions are estimated with sub-pixel image processing techniques, and these estimates are provided to a model generalizing the estimated positions to the entire field of view.

Such a perspective projection model is usually taken as a starting point for optical acquisition devices calibration. It is then supplemented with distortion terms, in order to get very precise calibration of all pixels in the camera.

In **"A Generic Camera Model and Calibration Method for Conventional, Wide-Angle, and Fish-Eye Lenses"**, Pattern Analysis and Machine Intelligence, IEEE Transactions on 28, no. 8 (2006): 1335-1340, Kannala et al. consider that the perspective projection model is not suitable for fish-eye lenses, and suggest to use a more flexible radially symmetric projection model. This calibration method for fish-eye lenses requires that the camera observe a planar calibration pattern.

In **"Multi-media Projector-Single Camera Photogrammetric System For Fast 3d Reconstruction"**, *International Archives of Photogrammetry,* Remote Sensing and Spatial Information Sciences, Commission V Symposium, pp. 343-347. 2010, V. A. Knyaz proposes the use of a multimedia projector to simultaneously calibrate several cameras in a 3D reconstruction context.

Existing calibration methods hence rely on a global model transforming the geometry in the object space to the geometry in the image space. However, such prior art techniques are not suited for light field acquisition devices, which show a complex design and embed optical elements like lenslet arrays, which do not always follow specifications with all the required precision.

It is actually recalled that light-field capture devices (also referred to as "light-field data acquisition devices") have been designed to measure a four-dimensional (4D) light-field of the scene by capturing the light directions from different viewpoints of that scene. Thus, by measuring the amount of light traveling along each beam of light that intersects the photosensor, these devices can capture additional optical information (information about the directional distribution of the bundle of light rays) for providing new imaging applications by post-processing. The information acquired/obtained by a light-field capture device is referred to as the light-field data.

Light-field capture devices are defined herein as any devices that are capable of capturing light-field data. There are several types of light-field capture devices, among which:

- plenoptic devices, which use a microlens array placed between the image sensor and the main lens, as described in document US 2013/0222633;
- a camera array, as described by Wilburn et al. in "High performance imaging using large camera arrays." ACM Transactions on Graphics (TOG) 24, no. 3 (2005): 765-776 and in patent document US 8514491 B2.

For light field acquisition devices, a precise model of the optics (including defects such as microlens array deformations or misalignment) is more complex than with classical single pupil optical systems. Moreover, with light field acquisition devices, blur or vignetting can affect image forming, distorting the relationship between a source point and its image on the sensor. Last, the notion of stationary Point Spread Function, which is used when calibrating conventional image acquisition devices, does not hold for light field acquisition devices.

It is hence necessary to provide calibration techniques, which are suited for calibrating light field acquisition devices.

Actually, the goal of plenoptic camera calibration is to determine the positions of the centers of the micro-images formed on the sensor by the array of micro-lenses. Such centers are also called micro-centers. The positions of micro-centers are indeed required for computing focal stacks or matrices of views, i.e. for turning raw plenoptic data into workable imaging material. Yet, micro-centers localization is not straightforward, notably because peripheral pixels are especially difficult to exploit since they are dark.

Specific calibration methods and models have hence been proposed for plenoptic or camera arrays acquisition, as in "Using Plane + Parallax for Calibrating Dense Camera Arrays", Computer Vision and Pattern Recognition, 2004. CVPR 2004. Proceedings of the 2004 IEEE Computer Society Conference on, vol. 1, pp. 1-2. IEEE, 2004 by Vaish et al. This document describes a procedure to calibrate camera arrays used to capture light fields using a planar + parallax framework.

US 2014/146184 A1 discloses the determination of the microlens spacing and rotation, possibly by an evaluation in the Fourier domain.

Yunsu Bok ET AL: "Geometric Calibration of Micro-Lens-Based Light Field Cameras Using Line Features", Computer Vision - ECCV 2014. ECCV 2014. Lecture Notes in Computer Science, vol 8694, 6 September 2014 (2014-09-06), pages 47-61, discloses the geometric calibration of microlens-based light-field imagers, in which an imaged specific calibration pattern is evaluated in each sub-image, possibly by computing the cross-correlation with the calibration pattern.

US 2011/273609 A1 discloses the determination of the microlens spacing by evaluating the autocorrelation of the raw light-field image.

It would be desirable to provide a new technique for estimating the chief ray projection on the sensor of a light field acquisition device, which would allow calibrating light field acquisition devices with higher precision. More precisely, it would be desirable to provide a new technique for estimating the position of the chief ray on the sensor of a light field acquisition device, which could form a prior step for a set of robust methods allowing to spot the centers of micro-images on the whole image formed on the sensor.

3. Summary

According to an embodiment, a method for estimating the position, on a sensor of a light-field acquisition device, of a projection of a chief ray, corresponding to an optical axis of said light-field acquisition device is provided, which comprises:

- for each candidate pixel in an area of a raw image being formed by uniform white lighting of said light-field acquisition device, called a candidate area, comprising potential positions of said projection of the chief ray, called candidate pixels, computing cross-correlation of the raw image restricted to the candidate area with a symmetrical image obtained by applying central symmetry with respect to the candidate pixel to the raw image restricted to the candidate area, providing a cross-correlation score for the candidate pixel;
- determining, as a coarse estimate of the position of the chief ray projection, the candidate pixel associated to the highest cross-correlation score.

The present disclosure thus relies on a different approach for estimating the position of the chief ray projection on the sensor of a plenoptic camera.

Actually, it consists in estimating the position of the chief ray within the raw picture formed on the sensor through uniform white lighting, thanks to an analysis of the shapes formed on this raw image by the optical system of the light-field acquisition device. When considering a plenoptic camera, it comprises a main lens (or a set of lenses which may be assimilated to a unique main lens), a photo-sensor, and a micro-lens array located between the main lens and the sensor. The main lens focuses the subject onto, or near, the micro-lens array. The micro-lens array splits the incoming light rays according to their directions. As a consequence, micro-images form on the sensor.

The present disclosure advantageously makes use of the optical (aka artificial) vignetting, which affects peripheral micro-images shape, making them look like a cat's eye, or an almond, while central micro-images show the same shape as the micro-lenses, i.e. are usually circular or hexagonal. It further relies on cross-correlation computation, which is an interesting mathematical tool for finding repeating patterns, and which allows to achieve shape matching on the raw image formed on the sensor.

Hence, by analyzing the shapes of the micro-images formed on the sensor, it is possible to determine a center of symmetry for this repeating pattern of shapes, which gives a coarse estimate of the position of the chief ray projection on the sensor.

It is important to note that this center of symmetry may be sought in the whole raw image, for brute force search, or in a candidate area, corresponding to a restricted central area of the raw image, for lighter computational load.

It is recalled that, in the present disclosure, the chief ray corresponds to the optical axis of the optical system of the light-field acquisition device. Furthermore, it is assumed that the chief ray also corresponds to the axis of a cylinder defined by the rims surrounding front and rear elements of the main lens of the light-field acquisition device.

The coarse estimate of the chief ray projection on the sensor may be used in a further plenoptic camera calibration process for recovering the whole pattern of micro-centers (i.e. centers of the micro-images) in the raw white image.

According to an embodiment, such a method also comprises refining said coarse estimate of the position of the chief ray projection by analyzing energy fall-off on part of the candidate area.

Hence, the present disclosure also relies on the effect of natural vignetting, which makes peripheral pixels darker than center pixels, in order to refine the coarse estimate of the chief ray projection. Shape matching's coarse result thus initializes the range of research for illumination falloff characterization, which is computationally more expensive, but delivers more accurate estimation of the chief ray projection.

According to an embodiment, such a method further comprises:

- for each pixel in a set of at least one pixel close to said coarse estimate (65), called a refinement candidate set:

   ∘ for each ring in a sequence of concentric rings centered on said pixel and comprised in said candidate area, computing a sum of image values at all pixels in the ring normalized by the cardinal number of pixels in the ring;
   ∘ computing an energy fall-off score corresponding to the sum, on the sequence of concentric rings, of the normalized sum of image values for each ring, normalized by said normalized sum of image values of the ring of smaller radius;

- determining, as a refined estimate of the position of the chief ray projection, the pixel in the refinement candidate set associated to the lowest energy fall-off score.

The coarse estimation obtained through optical vignetting analysis with shape matching is interesting in that it is computationally inexpensive. However, its accuracy is limited to the radius *r* of a micro-image, or to $\sqrt{2}.r.$ It is thus important to refine this coarse estimate, starting with a set of refinement candidates, which may for example be chosen at a distance smaller than $\sqrt{2}.r,$ or smaller than 2*r*, to the coarse estimate.

For example, the refinement candidate set comprises pixels which distance to the coarse estimate is smaller than or equal to twice the radius of a micro-image.

Such a refinement step aims at determining a radial symmetry center for the illumination pattern of the raw image.

According to an embodiment, concentric circles forming the concentric rings are distant from each other from a distance r targeted to correspond to a radius of a micro-image.

The present disclosure also concerns a method for calibrating a light-field acquisition device, comprising a main lens, a sensor, and a micro-lens array placed between said main lens and said sensor, a micro-lens of said micro-lens array forming a micro-image on said sensor, which comprises:

   estimating the position, on said sensor, of a projection of a chief ray, corresponding to an optical axis of said light-field acquisition device, as described previously;
   determining positions of centers of said micro-images using said estimated position of the projection of said chief ray.

Such a calibration method may either deal directly with a coarse estimate of the chief ray projection, or with a refined estimate, resulting from illumination falloff characterization.

The present disclosure also concerns a computer program product downloadable from a communication network and/or recorded on a medium readable by a computer and/or executable by a processor, comprising program code instructions for implementing a method as described previously.

The present disclosure also concerns a non-transitory computer-readable medium comprising a computer program product recorded thereon and capable of being run by a processor, including program code instructions for implementing a method as described previously.

Such computer programs may be stored on a computer readable storage medium. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read- - only memory (ROM); an erasable programmable read- - only memory (EPROM or Flash memory); a portable compact disc read- - only memory (CD-ROM); an optical storage device; a magnetic storage device; or any suitable combination of the foregoing.

The present disclosure also concerns a system for estimating the position, on a sensor of a light-field acquisition device, of a projection of a chief ray, corresponding to an optical axis of said light-field acquisition device, comprising:

- a processor configured to:

  ∘ for each candidate pixel in a raw image being formed by uniform white lighting of said light-field acquisition device, called a candidate area, comprising potential positions of said projection, called candidate pixels, compute cross-correlation of the raw image restricted to said candidate area with a symmetrical image obtained by applying central symmetry with respect to said candidate pixel to said raw image restricted to said candidate area, providing a cross-correlation score for said candidate pixel;
  ∘ determine, as a coarse estimate of the position of said chief ray projection, the candidate pixel associated to the highest cross-correlation score.

According to an embodiment, the processor is further configured to refine the coarse estimate of the position of the chief ray projection by analyzing energy fall-off on the candidate area.

According to a further embodiment, the processor is further configured to:

- for each pixel in a set of at least one pixel close to said coarse estimate, called a refinement candidate set:

  ∘ for each ring in a sequence of concentric rings centered on said pixel and comprised in said candidate area, compute a sum of image values at all pixels in the ring normalized by the cardinal number of pixels in said ring;
  ∘ compute an energy fall-off score corresponding to the sum, on the sequence of concentric rings, of said normalized sum of image values for each ring, normalized by said normalized sum of image values of the ring of smaller radius;

- determine, as a refined estimate of the position of said chief ray projection, the pixel in said refinement candidate set associated to the lowest energy fall-off score.

More generally, all the assets and features described previously in relation to the method for estimating the position of the chief ray projection on the sensor of a light-field acquisition device also apply to the present system for estimating the position of the position of a chief ray.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

## 4. Brief description of the drawings

The present disclosure can be better understood with reference to the following description and drawings, given by way of example and not limiting the scope of protection, and in which:

- Figure 1 schematically illustrates a plenoptic camera;
- Figure 2 illustrates a zoom-in of a raw white image shot by the plenoptic camera of figure 1;
- Figure 3 illustrates a zoom-in of a raw white image shot by the plenoptic camera of figure 1, showing cat's eye vignetting in sensor periphery;
- Figure 4 illustrates four views of a camera lens, showing two different apertures, and seen from two different viewpoints, as an illustration of optical vignetting;
- Figure 5 shows the chief ray projection on the sensor of the plenoptic camera of figure 1;
- Figure 6 is a flow chart for explaining a process for determining a coarse estimate of the position of a chief ray projection on the sensor of a light-field acquisition device according to an embodiment of the present disclosure;
- Figure 7 shows micro-images formed on the sensor of the plenoptic camera of figure 1, when affected by optical vignetting;
- Figure 8 shows micro-images formed on the sensor of the plenoptic camera of figure 1 and illustrates the accuracy of the coarse estimate of figure 6;
- Figure 9 is a flow chart for explaining a process for refining the coarse estimate determined by the process of figure 6 according to an embodiment of the present disclosure;
- Figure 10 is a schematic block diagram illustrating an example of an apparatus for estimating the position of the chief ray projection on the sensor of a light-field acquisition device according to an embodiment of the present disclosure.

The components in the figures are not necessarily to scale, emphasis instead being placed upon illustrating the principles of the disclosure.

## 5. Detailed description

The general principle of the present disclosure relies on the analysis of the optical vignetting effect affecting a raw image formed on the sensor of a light-field acquisition device, in order to determine a coarse estimate of the position of the chief ray projection on this sensor. Such a coarse estimate may be advantageously used in further calibration methods of the light-field acquisition device. Alternately, analyzing the effect of natural vignetting on this raw image allows refining such a coarse estimate.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the scope of the disclosure as defined by the claims. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

While not explicitly described, the present embodiments and variants may be employed in any combination or sub-combination.

It must be noted that, in the foregoing, the exemplary embodiments are described in relation to a plenoptic camera.

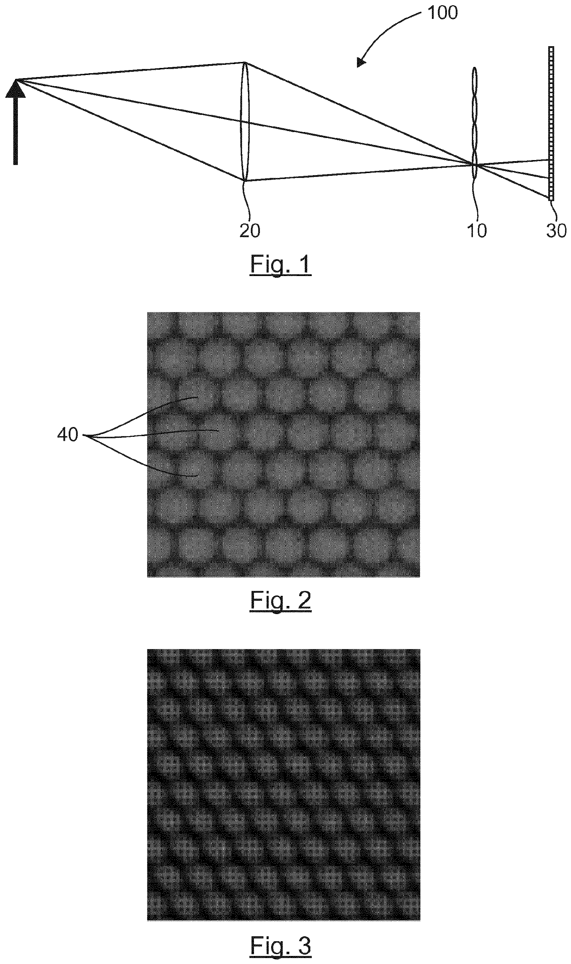

As schematically illustrated in **Figure 1**, a plenoptic camera 100 uses a micro-lens array 10 positioned in the image plane of the main lens 20 and before a photosensor 30 onto which one micro-image (also called sub-image) per micro-lens is projected. In this configuration, each micro-image depicts a certain area of the captured scene and each pixel associated with that micro-image depicts this certain area from the point of view of a certain sub-aperture location on the main lens exit pupil.

The raw image of the scene obtained as a result is the sum of all the micro-images acquired from respective portions of the photosensor. This raw image contains the angular information of the light-field. In fact, the angular information is given by the relative position of pixels in the micro-images with respect to the centre of these micro-images.

Based on this raw image, the extraction of an image of the captured scene from a certain point of view, also called "de-multiplexing", can be performed by concatenating the raw pixels covered by each micro-image. This process can also be seen as a data conversion from a 2D raw image into a 4D light-field.

It is hence very important to determine the positions of the centres of the micro-images, also called micro-centres. The positions of micro-centres are indeed required for computing focal stacks or matrices of views, i.e. for turning raw plenoptic data into workable imaging material.

**Figure 2** illustrates a zoom-in of a raw white image shot by a plenoptic camera 100 of **figure 1**, such as a Lytro® camera for example. Such a raw white image forms on the sensor 30 when the plenoptic camera 100 is lightened by a white uniform light source. As may be observed on **figure 2**, micro-images show an overall hexagonal shape and appear on sensor 30 in a quincunx pattern, reflecting the shape of the micro-lenses and the pattern of the micro-lens array 10.

However, shapes and intensities of the micro-images are affected by vignetting, which may be simply described as the shading of the image towards its margin. Vignetting has several causes, among which:

- natural vignetting, which refers to the natural illumination falloff, that is generally admitted as proportional to the fourth power of the cosine of the angle at which the light impinges on the sensor. Natural vignetting makes peripheral pixels darker than center pixels in the image;
- optical vignetting, also known as artificial vignetting, which relates to the angle under which the entrance pupil of the camera is seen from different parts of the sensor. Optical vignetting affects peripheral micro-images shape, making them look like a cat's eye, or an almond.

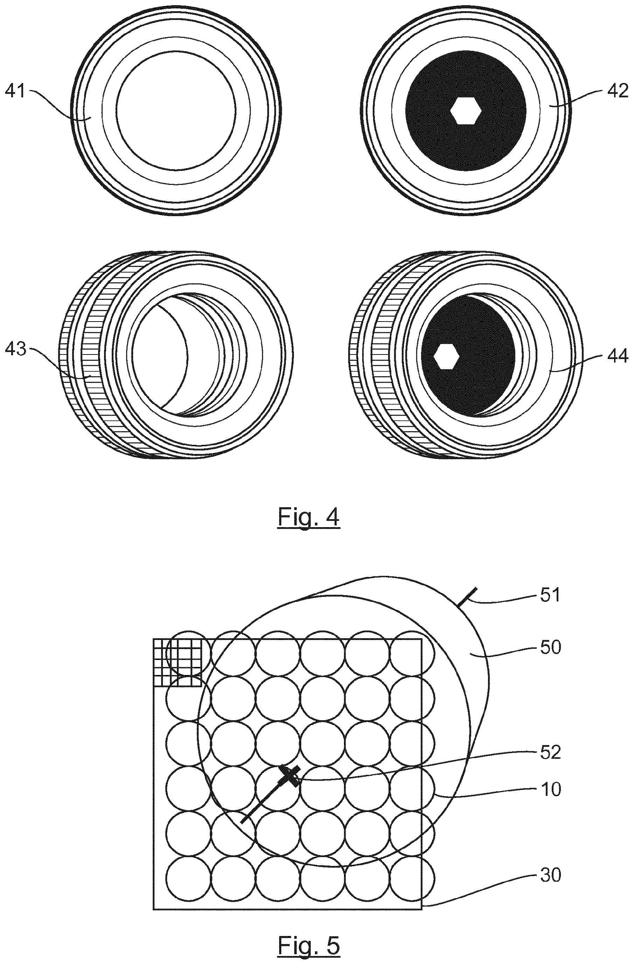

**Figure 3** illustrates a zoom-in of a raw white image, showing cat's eye vignetting in sensor periphery. **Figure 4** illustrates four views 41 to 44 of a camera lens, showing two different apertures, and seen from two different viewpoints. Openings (in white) denote the image of the pupil seen through all lens elements ending up in the image center (41, 42) or in image border (43, 44). As may be observed, in image borders and corners, the pupil may be partially shielded by the lens barrel. More precisely, the rims surrounding the front and rear elements of the camera lens delimit the lens aperture. Obviously, optical vignetting is lessened when closing the aperture (42, 44).

According to an embodiment of the disclosure, the shapes and intensities of the micro-images on sensor 30 are analyzed, in order to estimate the position of the chief ray within the raw picture of **figures 2** or **3**. It is recalled that the chief ray corresponds to the optical axis of the optical system of the plenoptic camera 100. In the present disclosure, it is assumed that the chief ray also corresponds to the axis of the cylinder defined by the rims surrounding front and rear elements of the camera lens of plenoptic camera 100, as illustrated by **figure 5**.

The main lens of a camera is classically made up of several lenses, centered on a same axis, and surrounded on their outer periphery by rims. Given their overall circular shapes, the lenses placed one behind another and surrounded by rims form a cylinder 50, delimited by the front and rear elements of the main lens. Reference numeral 51 denotes the axis of cylinder 50. Reference numeral 52 designates the intersection of the cylinder axis 51 with sensor 30.

In the following, it is assumed that the center of symmetry of cat's eye shapes and the center of radial symmetry of illumination falloff both correspond to the same point 52 on sensor 30, i.e. the projection of the chief ray on the sensor.

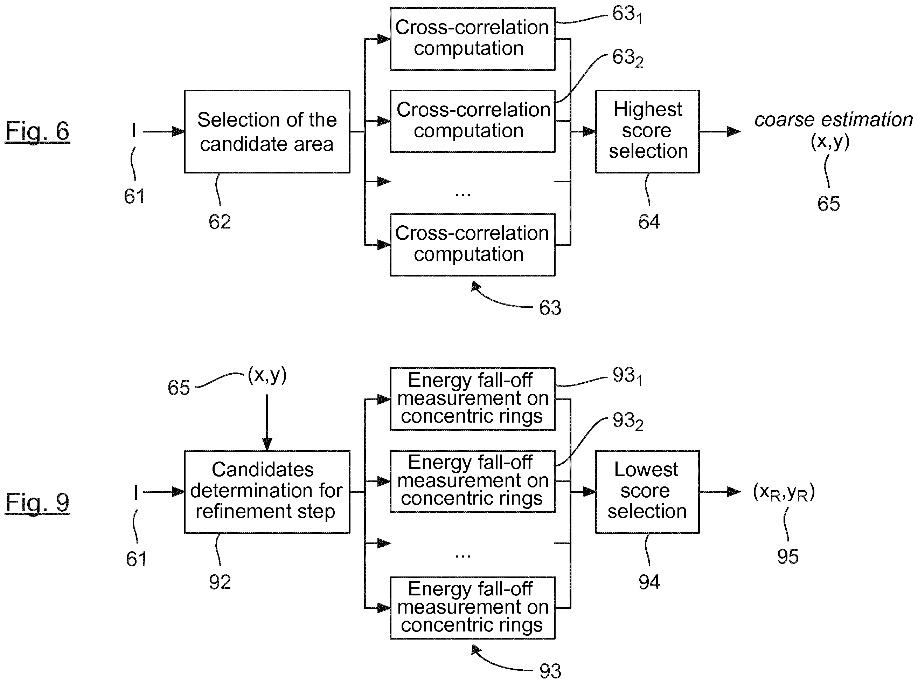

**Figure 6** gives a flow chart illustrating the process for determining a coarse estimate of the chief ray projection on the sensor of the light field acquisition device, according to an embodiment of the present disclosure. The input image $I$ 61 is a raw white plenoptic image formed on sensor 30, obtained by uniform white lighting of the plenoptic camera 100 by a light source (not shown). During this uniform white lighting, the main lens 20 and the micro-lenses 10 are aperture matched, so that micro-images 40 cover as many pixels as possible without overlapping with each other.

At step 62, a candidate area, comprising potential positions of the chief ray projection is selected within raw image $I$ 61. Such a candidate area may be the whole picture $I$ 61, when it is desired to carry out the search for the position of the chief ray projection in the whole picture. Otherwise, for a lighter computational load, the candidate area may be a restricted central area within the raw picture $I$ 61, for example covering 25% of the total area of the raw image.

The candidate area is denoted as $\Omega = [\![1, W]\!] \times [\![1, H]\!]$. It is possible to choose $W = H$ where W and H respectively denote the width and the height of the candidate area, in pixels.

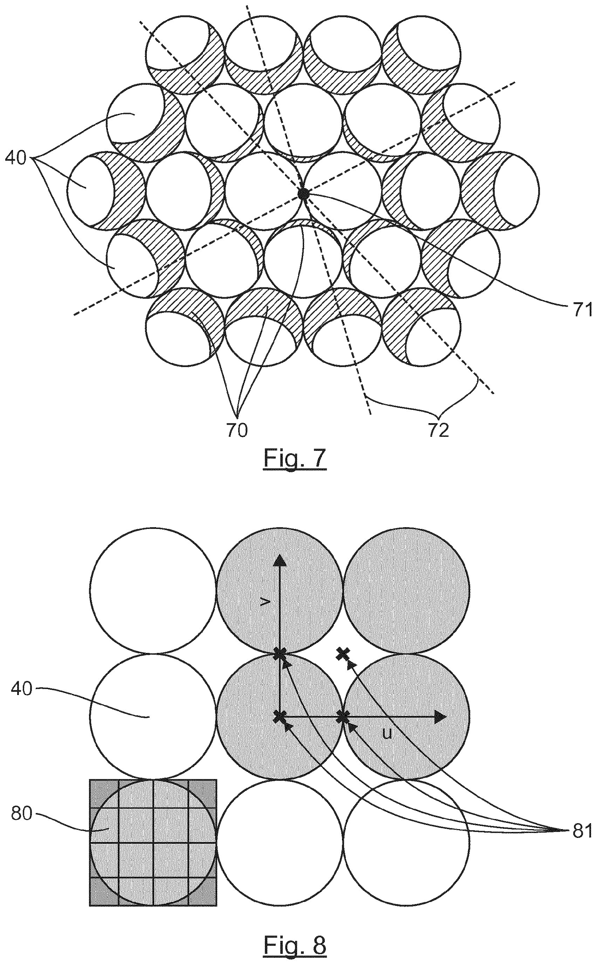

The process of **figure 6** uses cross-correlation, which is a mathematical tool for finding repeating patterns, such as the presence of a periodic signal obscured by noise, which is typically the case in raw plenoptic imaging, as illustrated by **figure 7**.

**Figure 7** shows micro-images 40 formed on sensor 30 of a plenoptic camera, when affected by optical vignetting. Reference numeral 71 denotes the symmetry center of the pattern of micro-images 40: micro-images close to the symmetry center show no or small dark areas 70 (shown with hatch lines), while a great part of micro-images close to the outer periphery of the pattern correspond to dark areas 70. Reference numerals 72 correspond to axis of symmetry of the pattern, going through symmetry center 71.

The candidate area $\Omega$ corresponds to a set of potential symmetry centers 71 in raw image $I$ 61. Let $(u, v) \in \Omega$ be pixel coordinates in the candidate area. At step 63, for each candidate pixel $(u_0, v_0)$ corresponding to a possible symmetry center in the candidate area $\Omega$, the following score is computed:

$$R(u_0, v_0) = \sum_{(u,v)\in\Omega} I[u_0 + u, v_0 + v].I[u_0 - u, v_0 - v]$$

In other words, for each candidate pixel $(u_0, v_0)$ in the candidate area $\Omega$, we compute a cross-correlation of the raw image $I$ 61 restricted to the candidate area $\Omega$ with a symmetrical image obtained by applying central symmetry with respect to the candidate pixel $(u_0, v_0)$ to the raw image $I$ 61 restricted to the candidate area $\Omega$. Each cross-correlation computation $63_i$ provides a cross-correlation score $R(u_0, v_0)$ for the candidate pixel $(u_0, v_0)$.

At step 64, the cross-correlation scores obtained for all pixels in the candidate area $\Omega$ are compared and the highest cross-correlation score is selected:

$$(x, y) = argmax\{R(u_0, v_0)\}$$

The pixel $(x, y)$ associated to the highest cross-correlation score $R(u_0, v_0)$ gives a coarse estimate 65 of the position of the chief ray projection on the sensor 30. Actually, the highest score indicates the most likely position of the chief ray projection with respect to optical vignetting, as illustrated by **figure 7**. Indeed, the highest score corresponds to a maximum overlapping of the micro-images, showing the same amount of areas of white and dark zones, and hence a center of symmetry for the micro-images pattern.

Such a coarse estimate $(x, y)$ 65 may be used in further calibration techniques, for example for determining the positions of the micro-centers of the micro-images 40 for plenoptic camera 100.

However, as illustrated by **figure 8**, the accuracy of coarse estimate $(x, y)$ 65 is limited to $\sqrt{2}.r$, where $r$ is the radius of a micro-image 40. **Figure 8** shows nine micro-images 40, as well as, for the bottom left one, the grid of 4x4 pixels 80 associated to a micro-image. When considering the central micro-image of **figure 8**, and assuming the coarse estimate $(x, y)$ 65 corresponds to one of the four top right pixels associated to it, it might be difficult to determine which of the four positions referenced 81 corresponds to the projection of the chief ray on sensor 30. Actually, all four positions referenced 81 are possible positions of the chief ray projection, for which whole micro-images 40 match each other in symmetry.

According to an embodiment of the present disclosure described in relation to **figure 9**, the coarse estimate $(x, y)$ 65 is hence refined, by analysis of the natural vignetting affecting the raw image $I$ 61.

The input image is the raw white plenoptic image $I$ 61. Knowing the coarse estimate $(x, y)$ 65 of the chief ray projection on sensor 30, we first determine at step 92 a set of pixels close to the coarse estimate $(x, y)$ 65, called a refinement candidate set, which are candidates for this refinement step. For each candidate $(u_0, v_0)$ in the refinement candidate set, natural vignetting is analyzed by energy fall-off measurement on concentric rings centered on the candidate $(u_0, v_0)$ at step 93.

Let $(r_i)_{1\leq i\leq N}$ denote a sequence of increasing radii, with e.g. $r_n = n. r$, $r > 0$ and $r_N \leq min(W, H)$. Considering a potential candidate for radial symmetry center $(u_0, v_0)$, we consider the rings bounded by two consecutive circles:

$$D_i = \left\{(u, v) \in \Omega: r_i < \sqrt{(u - u_0)^2 + (v - v_0)^2} \leq r_{i+1}\right\}$$

Raw plenoptic samples are summed within the ring in order to get:

$$S_i(u_0, v_0) = \frac{1}{|D_i|} \sum_{(u,v)\in D_i} I[u, v]$$

where $|.|$ denotes the cardinal number of a set, $r$ denotes a radius in pixels, $n$, just like $i$, denotes an index in the sequel of $r_n, D_n, S_n$., which starts from 1 and ends at $N$ (note that it is pointless to consider $r_N > min(W, H)$), $Di$ denotes a ring bounded by two consecutive discs and $Si$ is the mean light intensity averaged on every pixel of $Di$.

Because of natural illumination falloff due to natural vignetting, the sequence of $(S_i)_{1 \leq i \leq N}$ is monotonically decreasing if centered on the chief ray. Thus, degree of natural vignetting can be analyzed with a value of $S_i$. Therefore, we consider the corresponding series, normalized by its first occurrence:

$$T_n = \frac{1}{S_1} \sum_{i=1}^{n} S_i$$

With respect to natural vignetting, the most likely position of the chief ray projection on sensor 30 corresponds to the lowest final score, which is selected at step 94:

$$(x_R, y_R) = argmin\{T_N(u_0, v_0)\}$$

The position $(x_R, y_R)$ associated to the lowest energy fall-off score gives a refined estimate 95 of the position of the chief ray projection on the sensor 30. Such a refined estimate of the position of the chief ray projection on sensor 30 may be used in further calibration methods, which are out of the scope of the present disclosure, and are not described here in further details.

It is important to carefully tune the sequence $(r_i)_{1 \leq i \leq N}$ of increasing radii. Choosing $r$ of the magnitude of the radius of a micro-image 40 is relevant. However, other values may also be chosen.

The refinement process of **figure 9** is computationally more expensive than the coarse estimate process of **figure 6**. It is therefore interesting to use it as a refinement step. However, in an alternate embodiment, an estimation of the position of the chief ray projection could be directly obtained by analysis of natural vignetting, as described in **figure 9**. Step 92 for determining a refinement candidate set would then be replaced by a step for selecting a candidate area, similar to step 62 in **figure 6**.

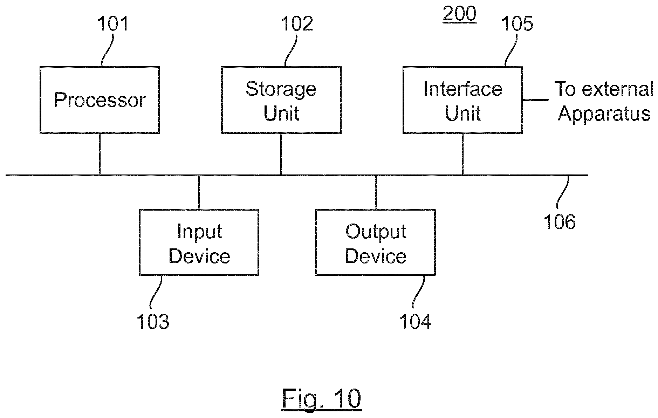

**Figure 10** is a schematic block diagram illustrating an example of part of a system for estimating the position of the chief ray projection on the sensor of a light-field acquisition device according to an embodiment of the present disclosure.

An apparatus 200 illustrated in **figure 10** includes a processor 101, a storage unit 102, an input device 103, an output device 104, and an interface unit 105 which are connected by a bus 106. Of course, constituent elements of the computer apparatus 200 may be connected by a connection other than a bus connection using the bus 106.

The processor 101 controls operations of the apparatus 200. The storage unit 102 stores at least one program to be executed by the processor 101, and various data, including data relating to the estimate position of the chief ray projection or to the selected candidate area, parameters used by computations performed by the processor 101, intermediate data of computations performed by the processor 101, and so on. The processor 101 may be formed by any known and suitable hardware, or software, or a combination of hardware and software. For example, the processor 101 may be formed by dedicated hardware such as a processing circuit, or by a programmable processing unit such as a CPU (Central Processing Unit) that executes a program stored in a memory thereof. As the cross-correlation computations of step 63 (figure 6) are particularly suited for parallelism on a GPU, the processor 101 may be formed by a Central Processing Unit (CPU) cooperating with a Graphics Processing Unit (GPU) using a CUDA (Compute Unified Device Architecture) technique or OpenCL (Open Computing Language) kernels.

The storage unit 102 may be formed by any suitable storage or means capable of storing the program, data, or the like in a computer-readable manner. Examples of the storage unit 102 include non-transitory computer-readable storage media such as semiconductor memory devices, and magnetic, optical, or magneto-optical recording media loaded into a read and write unit. The program causes the processor 101 to perform a process for estimating the position of the chief ray projection on the sensor of a light field acquisition device according to an embodiment of the present disclosure as described previously.

The input device 103 may be formed by a keyboard, a pointing device such as a mouse, or the like for use by the user to input commands. The output device 104 may be formed by a display device to display, for example, the calibration data of the light field acquisition device, including the coarse and refined estimate of the chief ray projection. The input device 103 and the output device 104 may be formed integrally by a touchscreen panel, for example. The input device 103 may be used by an operator for selecting, on the raw image, the candidate area, comprising potential positions of the chief ray projection. Such a candidate area may then be stored into storage unit 102.

The interface unit 105 provides an interface between the apparatus 200 and an external apparatus. The interface unit 105 may be communicable with the external apparatus via cable or wireless communication. In this embodiment, the external apparatus may be the plenoptic camera 100 and a uniform whit light source for lighting plenoptic camera 100. In this case, the raw white plenoptic image formed on the sensor 30 by the light source can be input from the plenoptic camera 100 to the apparatus 200 through the interface unit 105, then stored in the storage unit 102.

Although only one processor 101 is shown on **figure 10**, it must be understood that such a processor may comprise different modules and units embodying the functions carried out by apparatus 200 according to embodiments of the present disclosure, such as:

- a module for computing (63) parallel cross-correlation scores $R(u_0, v_0)$ for a set of candidate pixels $(u_0, v_0)$;
- a module for selecting (64) the highest cross-correlation score as a coarse estimate of the position of the chief ray projection on the sensor 30.

In a specific embodiment, such a processor 101 also comprises a refinement module for refining such a coarse estimate by illumination falloff analysis on the raw image. Such a refinement module comprises several parallel units for computing energy fall-off scores for a set of candidate pixels by:

○ determining a sequence of concentric rings centered on the pixel and comprised in the candidate area;
○ for each ring in the sequence, determining a sum of image values at all pixels in the ring normalized by the cardinal number of pixels in the ring;
○ computing an energy fall-off score corresponding to the sum, on the sequence of concentric rings, of the normalized sum of image values for each ring, normalized by the normalized sum of image values of the ring of smaller radius.

Such a refinement module also comprises a module for determining, as a refined estimate of the position of the chief ray projection, the pixel in the refinement candidate set associated to the lowest energy fall-off score.

These modules and units may also be embodied in several processors 101 communicating and co-operating with each other.

The present disclosure thus provides a system and method allowing precise identification of the position of chief rays in the observed object space corresponding to individual pixels of a light field sensor. It thus provides a precise technique for calibrating light field data acquisition devices, and notably plenoptic cameras.

## Claims

1. Method for estimating the position (52), on a sensor (30) of a light-field acquisition device (100) having a chief ray, corresponding to an optical axis of said light-field acquisition device, wherein the light-field is a four-dimensional function describing the light from different directions at different points in a scene, the method comprising:

   - for each candidate pixel in a candidate area of a raw image formed by uniform white lighting of said light-field acquisition device and having potential positions for the chief ray, called candidate pixels, computing (631, 632, 63) cross-correlation of the raw image restricted to said candidate area with a symmetrical image obtained by applying central symmetry with respect to said candidate pixel restricted to said candidate area, and providing a cross correlation score for said candidate pixel; and
   - determining (64), as a coarse estimate (65) of the position of said chief ray projection, the candidate pixel associated to the highest cross-correlation score.

2. The method of claim 1, wherein it also comprises refining said coarse estimate (65) of the position of said chief ray projection by analyzing (93) energy fall-off on part of said candidate area.

3. The method of claim 2, wherein it further comprises:

   - for each pixel in a set of at least one pixel close to said coarse estimate (65), called a refinement candidate set:

     • for each ring in a sequence of concentric rings centered on said pixel and comprised in said candidate area, computing a sum of image values at all pixels in the ring normalized by the cardinal number of pixels in said ring;
     • computing an energy fall-off score corresponding to the sum, on the sequence of concentric rings, of said normalized sum of image values for each ring, normalized by said normalized sum of image values of the ring of smaller radius;

   - determining (94), as a refined estimate (95) of the position of said chief ray projection, the pixel in said refinement candidate set associated to the lowest energy fall-off score.

4.  The method of claim 3, wherein said light-field acquisition device comprises a main lens (20), a sensor (30), and a micro-lens array (10) placed between said main lens and said sensor, a micro-lens of said micro-lens array forming a micro-image (40) on said sensor, and wherein concentric circles forming said concentric rings are distant from each other from a distance r targeted to correspond to a radius of a micro image.

5.  The method of claim 3 or 4, wherein said light-field acquisition device comprises a main lens, a sensor, and a micro-lens array placed between said main lens and said sensor, a micro-lens of said micro-lens array forming a micro-image on said sensor, and wherein said refinement candidate set comprises pixels which distance to said coarse estimate is smaller than or equal to twice the radius of a micro-image.

6.  A method for calibrating a light-field acquisition device, comprising a main lens (20), a sensor (30), and a micro-lens array (10) placed between said main lens and said sensor, a micro-lens of said micro-lens array forming a micro-image (40) on said sensor, said method comprising:

    - estimating the position, on said sensor, of a projection of a chief ray, corresponding to an optical axis of said light-field acquisition device, according to any of claims 1 to 5;
    - determining positions of centers of said micro-images using said estimated position of the projection of said chief ray.

7.  An apparatus (200) for estimating the position, on a sensor of a light-field acquisition device, of a projection of a chief ray, corresponding to an optical axis of said light-field acquisition device, wherein the light-field is a four-dimensional function describing the light from different directions at different points in a scene, the apparatus comprising a processor (101) configured to:

    - for each candidate pixel in a raw image being formed by uniform white lighting of said light-field acquisition device, called a candidate area, comprising potential positions of said projection of the chief ray, called candidate pixels, compute cross-correlation of the raw image restricted to said candidate area with a symmetrical image obtained by applying central symmetry with respect to said candidate pixel to said raw image restricted to said candidate area,
    and provide a cross-correlation score for said candidate pixel; and
    - determine, as a coarse estimate of the position of said chief ray projection, the candidate pixel associated to the highest cross correlation score.

8.  The apparatus of claim 7, wherein the processor is further configured to refine said coarse estimate of the position of said chief ray projection by analyzing energy fall-off on said candidate area.

9.  The apparatus of claim 8, wherein the processor is further configured to:

    - determine a refinement candidate set for each pixel defined as a set of at least one pixel close to said coarse estimate,
    - compute for each ring in a sequence of concentric rings centered on said pixel and comprised in said candidate area, a sum of image values; wherein said values are normalized by the cardinal number of pixels in said ring; compute an energy fall-off score corresponding to the sum, on the sequence of concentric rings of said normalized sum of image values; wherein said ring is normalized by sum of image values of the ring of smaller radius;
    - determine, as a refined estimate of the position of said chief ray projection, the pixel in said refinement candidate set associated with the lowest energy fall-off score.

10. A system for estimating the position, on a sensor of a light-field acquisition device, of a projection of a chief ray, corresponding to an optical axis of said light field acquisition device comprising an apparatus according to any of claims 7 to 9 and a uniform white light source for lighting said light-field acquisition device in order to form a raw image on said sensor.

11. A computer program product downloadable from a communication network and/or recorded on a medium readable by a computer and/or executable by a processor, comprising program code instructions for implementing a method according to any one of claims 1 to 5.

**12.** A non-transitory computer-readable medium comprising a computer program product recorded thereon and capable of being run by a processor, including program code instructions for implementing a method according to any one of claims 1 to 5.

**Patentansprüche**

**1.** Verfahren zum Schätzen der Position (52) auf einem Sensor (30) einer Lichtfelderfassungsvorrichtung (100) mit einem Hauptstrahl, der einer optischen Achse der Lichtfelderfassungsvorrichtung entspricht, wobei das Lichtfeld eine vierdimensionale Funktion ist, die das Licht aus unterschiedlichen Richtungen an unterschiedlichen Punkten in einer Szene beschreibt, wobei das Verfahren umfasst:

- für jedes Kandidatenpixel in einem Kandidatenbereich eines Ausgangsbilds, das durch gleichförmiges weißes Beleuchten der Lichtfelderfassungsvorrichtung erzeugt wird und das potentielle Positionen für den Hauptstrahl, Kandidatenpixel genannt, aufweist, Berechnen (631, 632, 63) der Kreuzkorrelation des Ausgangsbilds, beschränkt auf den Kandidatenbereich, mit einem symmetrischen Bild, das durch Anwenden einer Zentralsymmetrie in Bezug auf das Kandidatenpixel, beschränkt auf den Kandidatenbereich, erhalten wird, und Bereitstellen einer Kreuzkorrelationsbewertung für das Kandidatenpixel; und
- Bestimmen (64) des Kandidatenpixels, das der höchsten Kreuzkorrelationsbewertung zugeordnet ist, als einen groben Schätzwert (65) der Position der Hauptstrahlprojektion.

**2.** Verfahren nach Anspruch 1, wobei es außerdem das Verfeinern des groben Schätzwerts (65) der Position der Hauptstrahlprojektion durch Analysieren (93) des Energieabfalls in einem Teil des Kandidatenbereichs umfasst.

**3.** Verfahren nach Anspruch 2, wobei es ferner umfasst:

- für jedes Pixel in einer Menge mindestens eines Pixels in der Nähe des groben Schätzwerts (65), eine Verfeinerungskandidatenmenge genannt:

• für jeden Ring in einer Folge konzentrischer Ringe, die um das Pixel zentriert sind und die in dem Kandidatenbereich enthalten sind, Berechnen einer Summe von Bildwerten an allen Pixeln in dem Ring, die durch die Kardinalzahl von Pixeln in dem Ring normiert werden;
• Berechnen einer der Summe entsprechenden Energieabfallbewertung der normierten Summe von Bildwerten an der Folge konzentrischer Ringe für jeden Ring, der durch die normierte Summe von Bildwerten des Rings mit kleinerem Radius normiert ist;

- Bestimmen (94) des Pixels in der Verfeinerungskandidatenmenge, dem die niedrigste Energieabfallbewertung zugeordnet ist, als einen verfeinerten Schätzwert (95) der Position der Hauptstrahlprojektion.

**4.** Verfahren nach Anspruch 3, wobei die Lichtfelderfassungsvorrichtung eine Hauptlinse (20), einen Sensor (30) und eine Mikrolinsenanordnung (10), die zwischen der Hauptlinse und dem Sensor angeordnet ist, umfasst, wobei eine Mikrolinse der Mikrolinsenanordnung ein Mikrobild (40) auf dem Sensor erzeugt und wobei konzentrische Kreise, die die konzentrischen Ringe bilden, voneinander in einer Entfernung r, die darauf abzielt, einem Radius eines Mikrobilds zu entsprechen, entfernt sind.

**5.** Verfahren nach Anspruch 3 oder 4, wobei die Lichtfelderfassungsvorrichtung eine Hauptlinse, einen Sensor und eine Mikrolinsenanordnung, die zwischen der Hauptlinse und dem Sensor angeordnet ist, umfasst, wobei eine Mikrolinse der Mikrolinsenanordnung auf dem Sensor ein Mikrobild erzeugt, und wobei die Verfeinerungskandidatenmenge Pixel umfasst, deren Entfernung zu dem groben Schätzwert kleiner oder gleich dem Doppelten des Radius eines Mikrobilds ist.

**6.** Verfahren zum Kalibrieren einer Lichtfelderfassungsvorrichtung, die eine Hauptlinse (20), einen Sensor (30) und eine Mikrolinsenanordnung (10), die zwischen der Hauptlinse und dem Sensor angeordnet ist, umfasst, wobei eine Mikrolinse der Mikrolinsenanordnung auf dem Sensor ein Mikrobild (40) erzeugt, wobei das Verfahren umfasst:

- Schätzen der Position einer Projektion eines Hauptstrahls, der einer optischen Achse der Lichtfelderfassungsvorrichtung entspricht, auf dem Sensor nach einem der Ansprüche 1 bis 5;
- Bestimmen von Positionen von Mitten der Mikrobilder unter Verwendung der geschätzten Position der Projektion des Hauptstrahls.

7. Vorrichtung (200) zum Schätzen der Position einer Projektion eines Hauptstrahls, der einer optischen Achse der Lichtfelderfassungsvorrichtung entspricht, auf einem Sensor einer Lichtfelderfassungsvorrichtung, wobei das Lichtfeld eine vierdimensionale Funktion ist, die das Licht aus unterschiedlichen Richtungen an unterschiedlichen Punkten in einer Szene beschreibt, wobei die Vorrichtung einen Prozessor (101) umfasst, der konfiguriert ist zum:

- für jedes Kandidatenpixel in einem Ausgangsbild, das durch gleichförmiges weißes Beleuchten der Lichtfelderfassungsvorrichtung erzeugt wird, ein Kandidatenbereich genannt, das potentielle Positionen der Projektion des Hauptstrahls, Kandidatenpixel genannt, umfasst, Berechnen der Kreuzkorrelation des Ausgangsbilds, beschränkt auf den Kandidatenbereich, mit einem symmetrischen Bild, das durch Anwenden einer Zentralsymmetrie in Bezug auf das Kandidatenpixel auf das Ausgangsbild, beschränkt auf den Kandidatenbereich, erhalten wird,
und Bereitstellen einer Kreuzkorrelationsbewertung für das Kandidatenpixel; und
- Bestimmen des Kandidatenpixels, das der höchsten Kreuzkorrelationsbewertung zugeordnet ist, als einen groben Schätzwert der Position der Hauptstrahlprojektion.

8. Vorrichtung nach Anspruch 7, wobei der Prozessor ferner dafür konfiguriert ist, den groben Schätzwert der Position der Hauptstrahlprojektion durch Analysieren des Energieabfalls in dem Kandidatenbereich zu verfeinern.

9. Vorrichtung nach Anspruch 8, wobei der Prozessor ferner konfiguriert ist zum:

- Bestimmen einer Verfeinerungskandidatenmenge für jedes Pixel, die als eine Menge mindestens eines Pixels in der Nähe des groben Schätzwerts definiert ist,
- für jeden Ring in einer Folge konzentrischer Ringe, die um das Pixel zentriert sind und die in dem Kandidatenbereich enthalten sind, Berechnen einer Summe von Bildwerten; wobei die Werte durch die Kardinalzahl von Pixeln in dem Ring normiert werden;
Berechnen einer der Summe entsprechenden Energieabfallbewertung der normierten Summe von Bildwerten an der Folge konzentrischer Ringe; wobei der Ring durch die Summe von Bildwerten des Rings mit kleinerem Radius normiert ist;
- Bestimmen des Pixels in der Verfeinerungskandidatenmenge, dem die niedrigste Energieabfallbewertung zugeordnet ist, als einen verfeinerten Schätzwert der Position der Hauptstrahlprojektion.

10. System zum Schätzen der Position einer Projektion eines Hauptstrahls, der einer optischen Achse der Lichtfelderfassungsvorrichtung entspricht, auf einem Sensor einer Lichtfelderfassungsvorrichtung, wobei das System eine Vorrichtung nach einem der Ansprüche 7 bis 9 und eine gleichförmige weiße Lichtquelle zum Beleuchten der Lichtfelderfassungsvorrichtung, um auf dem Sensor ein Ausgangsbild zu erzeugen, umfasst.

11. Computerprogrammprodukt, das von einem Kommunikationsnetz heruntergeladen werden kann und/oder das auf einem Medium aufgezeichnet ist, wobei es durch einen Computer gelesen und/oder durch einen Prozessor ausgeführt werden kann, wobei das Computerprogrammprodukt Programmcodeanweisungen zum Implementieren eines Verfahrens nach einem der Ansprüche 1 bis 5 umfasst.

12. Nichttransitorisches computerlesbares Medium, das ein Computerprogrammprodukt, das darauf aufgezeichnet ist und das durch einen Prozessor ausgeführt werden kann, das Programmcodeanweisungen zum Implementieren eines Verfahrens nach einem der Ansprüche 1 bis 5 enthält, umfasst.

**Revendications**

1. Procédé d'estimation de la position (52), sur un capteur (30), d'un dispositif d'acquisition de champ de lumière (100) ayant un rayon principal, correspondant à un axe optique dudit dispositif d'acquisition de champ de lumière, dans lequel le champ de lumière est une fonction quadridimensionnelle décrivant la lumière provenant de différentes directions en différents points d'une scène, le procédé comprenant :

- pour chaque pixel candidat dans une zone candidate d'une image brute formée par l'éclairage blanc uniforme dudit dispositif d'acquisition de champ de lumière et présentant des positions potentielles pour le rayon principal, appelées pixels candidats, le calcul (631, 632, 63) d'une corrélation croisée entre l'image brute limitée à ladite zone candidate et une image symétrique obtenue par l'application d'une symétrie centrale par rapport audit pixel candidat limité à ladite zone candidate, et la fourniture d'un score de corrélation croisée pour ledit pixel candidat ; et

- la détermination (64), sous la forme d'une estimation approximative (65) de la position de ladite projection du rayon principal, du pixel candidat associé au score de corrélation croisée le plus élevé.

2. Procédé selon la revendication 1, comprenant en outre l'affinement de ladite estimation approximative (65) de la position de ladite projection du rayon principal par l'analyse (93) de la perte d'énergie sur une partie de ladite zone candidate.

3. Procédé selon la revendication 2, comprenant en outre :

- pour chaque pixel d'un ensemble d'au moins un pixel proche de ladite estimation approximative (65), appelé ensemble candidat à l'affinement :

• pour chaque anneau d'une séquence d'anneaux concentriques centrés sur ledit pixel et compris dans ladite zone candidate, le calcul d'une somme de valeurs d'image de tous les pixels de l'anneau normalisée par le nombre cardinal de pixels dans ledit anneau ;
• le calcul d'un score de perte d'énergie correspondant à la somme, sur la séquence d'anneaux concentriques, de ladite somme normalisée de valeurs d'image pour chaque anneau, normalisée par ladite somme normalisée de valeurs d'image de l'anneau de rayon inférieur ;

- la détermination (94), sous la forme d'une estimation affinée (95) de la position de ladite projection rayon principal, du pixel dudit ensemble candidat à l'affinement associé au score de perte d'énergie le plus faible.

4. Procédé selon la revendication 3, dans lequel ledit dispositif d'acquisition de champ de lumière comprend une lentille principale (20), un capteur (30) et un ensemble de micro-lentilles (10) placé entre ladite lentille principale et ledit capteur, une micro-lentille dudit ensemble de micro-lentilles formant une micro-image (40) sur ledit capteur, et dans lequel des cercles concentriques formant lesdits anneaux concentriques sont espacés les uns des autres d'une distance r prévue pour correspondre à un rayon d'une micro-image.

5. Procédé selon la revendication 3 ou 4, dans lequel ledit dispositif d'acquisition de champ de lumière comprend une lentille principale, un capteur et un ensemble de micro-lentilles placé entre ladite lentille principale et ledit capteur, une micro-lentille dudit ensemble de micro-lentilles formant une micro-image sur ledit capteur, et dans lequel ledit ensemble candidat à l'affinement comprend des pixels dont la distance par rapport à ladite estimation approximative est inférieure ou égale à deux fois le rayon d'une micro-image.

6. Procédé d'étalonnage d'un dispositif d'acquisition de champ de lumière, comprenant une lentille principale (20), un capteur (30) et un ensemble de micro-lentilles (10) placé entre ladite lentille principale et ledit capteur, une micro-lentille dudit ensemble de micro-lentilles formant une micro-image (40) sur ledit capteur, ledit procédé comprenant :

- l'estimation de la position, sur ledit capteur, d'une projection d'un rayon principal, correspondant à un axe optique dudit dispositif d'acquisition de champ de lumière, selon l'une quelconque des revendications 1 à 5 ;
- la détermination des positions des centres desdites micro-images à l'aide de ladite position estimée de la projection dudit rayon principal.

7. Appareil (200) d'estimation de la position, sur un capteur d'un dispositif d'acquisition de champ de lumière, d'une projection d'un rayon principal, correspondant à un axe optique dudit dispositif d'acquisition de champ de lumière, dans lequel le champ de lumière est une fonction quadridimensionnelle décrivant la lumière provenant de différentes directions en différents points d'une scène, l'appareil comprenant un processeur (101) configuré pour :

- pour chaque pixel candidat dans une image brute formée par l'éclairage blanc uniforme dudit dispositif d'acquisition de champ de lumière, appelé zone candidate, comprenant des positions potentielles de ladite projection du rayon principal, appelées pixels candidats, calculer une corrélation croisée entre l'image brute limitée à ladite zone candidate et une image symétrique obtenue par l'application d'une symétrie centrale par rapport audit pixel candidat à ladite image brute limitée à ladite zone candidate, et fournir un score de corrélation croisée pour ledit pixel candidat ; et
- déterminer, sous la forme d'une estimation approximative de la position de ladite projection du rayon principal, le pixel candidat associé au score de corrélation croisée le plus élevé.

8. Appareil selon la revendication 7, dans lequel le processeur est en outre configuré pour affiner ladite estimation approximative de la position de ladite projection du rayon principal par l'analyse de la perte d'énergie sur ladite zone candidate.

9. Appareil selon la revendication 8, dans lequel le processeur est en outre configuré pour :

- déterminer un ensemble candidat à l'affinement pour chaque pixel défini comme un ensemble d'au moins un pixel proche de ladite estimation approximative,
- calculer pour chaque anneau d'une séquence d'anneaux concentriques centrés sur ledit pixel et compris dans ladite zone candidate, une somme de valeurs d'image, où lesdites valeurs sont normalisées par le nombre cardinal de pixels dans ledit anneau ;
- calculer un score de perte d'énergie correspondant à la somme, sur la séquence d'anneaux concentriques de ladite somme normalisée de valeurs d'image, où ledit anneau est normalisé par la somme de valeurs d'image de l'anneau de rayon inférieur ;
- déterminer, sous la forme d'une estimation affinée de la position de ladite projection rayon principal, le pixel dudit ensemble candidat à l'affinement associé au score de perte d'énergie le plus faible.

10. Système d'estimation de la position, sur un capteur d'un dispositif d'acquisition de champ de lumière, d'une projection d'un rayon principal, correspondant à un axe optique dudit dispositif d'acquisition de champ de lumière comprenant un appareil selon l'une quelconque des revendications 7 à 9 et une source de lumière blanche uniforme pour l'éclairage dudit dispositif d'acquisition de champ de lumière pour former une image brute sur ledit capteur.

11. Programme informatique téléchargeable à partir d'un réseau de communication et/ou enregistré sur un support lisible par un ordinateur et/ou exécutable par un processeur, comprenant des instructions de code de programme pour la mise en oeuvre d'un procédé selon l'une quelconque des revendications 1 à 5.

12. Support non transitoire lisible sur ordinateur comprenant un programme informatique enregistré et exécutable par un processeur, comprenant des instructions de code de programme pour la mise en oeuvre d'un procédé selon l'une quelconque des revendications 1 à 5.

100

20    10    30

Fig. 1

40

Fig. 2

Fig. 3

Fig. 4

Fig. 5

Fig. 6

I → [Selection of the candidate area] →

61

62

Cross-correlation computation — 63₁

Cross-correlation computation — 63₂

...

Cross-correlation computation — 63

→ [Highest score selection] → coarse estimation (x,y)

64

65

Fig. 9

65 — (x,y)

I →

61

[Candidates determination for refinement step] →

92

Energy fall-off measurement on concentric rings — 93₁

Energy fall-off measurement on concentric rings — 93₂

...

Energy fall-off measurement on concentric rings — 93

→ [Lowest score selection] → (x_R,y_R)

94

95

EP 3 182 372 B1

18

Fig. 7

Fig. 8

101 102 200 105

| Processor | Storage Unit | Interface Unit | To external Apparatus |

Input Device 103

Output Device 104

106

Fig. 10

## REFERENCES CITED IN THE DESCRIPTION

### Patent documents cited in the description

- US 20130222633 A
- US 8514491 B2
- US 2014146184 A1
- US 2011273609 A1

### Non-patent literature cited in the description

- A Generic Camera Model and Calibration Method for Conventional, Wide-Angle, and Fish-Eye Lenses. *Pattern Analysis and Machine Intelligence, IEEE Transactions on,* 2006, vol. 28 (8), 1335-1340
- Remote Sensing and Spatial Information Sciences. *Commission V Symposium,* 2010, 343-347
- **WILBURN et al.** High performance imaging using large camera arrays. *ACM Transactions on Graphics (TOG),* 2005, vol. 24 (3), 765-776
- Using Plane + Parallax for Calibrating Dense Camera Arrays. **VAISH.** Computer Vision and Pattern Recognition, 2004. CVPR. Proceedings of the 2004 IEEE Computer Society Conference on, 2004, vol. 1, 1-2
- **YUNSU BOK et al.** Geometric Calibration of Micro-Lens-Based Light Field Cameras Using Line Features. *Computer Vision - ECCV 2014. ECCV 2014. Lecture Notes in Computer Science,* 06 September 2014, vol. 8694, 47-61